Europäisches Patentamt

European Patent Office

Office européen des brevets

(11) Publication number: **0 280 555 B1**

# EUROPEAN PATENT SPECIFICATION

(45) Date of publication of patent specification: **27.12.91** (51) Int. Cl.<sup>5</sup>: **G11B 27/10, G11B 27/00**

(21) Application number: **88301648.7**

(22) Date of filing: **25.02.88**

(54) Magnetic recording and reproducing apparatus.

(30) Priority: **27.02.87 JP 45593/87**

(43) Date of publication of application:
**31.08.88 Bulletin 88/35**

(45) Publication of the grant of the patent:
**27.12.91 Bulletin 91/52**

(84) Designated Contracting States:
**DE GB**

(56) References cited:
**EP-A- 0 063 646**
**EP-A- 0 216 260**
**DE-A- 3 412 735**
**US-A- 4 347 538**
**US-A- 4 494 712**

Scholz "Handbuch der Magnetspeichertech-
nik" 1980, p. 268-269

(73) Proprietor: **MATSUSHITA ELECTRIC INDUSTRI-
AL CO., LTD.**
**1006, Oaza Kadoma**
**Kadoma-shi, Osaka-fu, 571(JP)**

(72) Inventor: **Ishiwata, Tetsuo**
**K12 406 Kirigaoka Senriyama**
**Suita City, Osaka 565(JP)**
Inventor: **Taguchi, Katsuyuki**
**20-1-1124 Higashinakaburi, 2-Chome**
**Hirakata City, Osaka 573(JP)**

(74) Representative: **Crawford, Andrew Birkby et al**
**A.A. THORNTON & CO. Northumberland**
**House 303-306 High Holborn**
**London WC1V 7LE(GB)**

## Description

The present invention relates to a magnetic tape driving portion of a magnetic recording and reproducing apparatus.

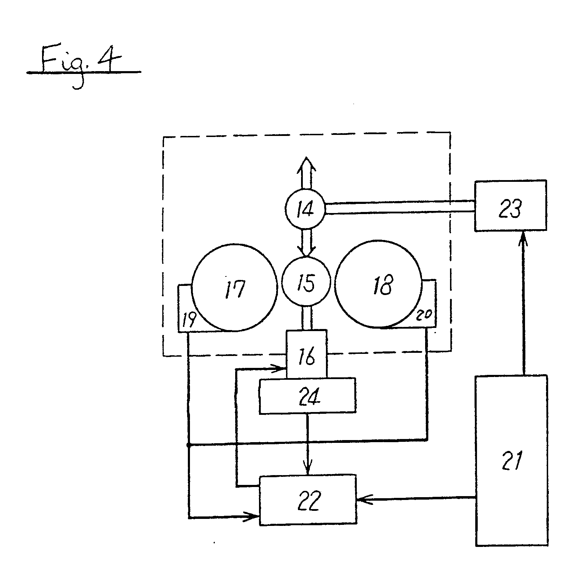

A block diagram of a tape driving system of a conventional magnetic recording and reproducing apparatus is hereunder shown in Fig. 4. There is an idler gear wheel 14, a driving gear wheel 15, a capstan motor 16, a feed gear wheel 17, a take-up gear wheel 18, an FG pulse generating portion 19 of the feed gear wheel, a first pulse generator 20 for generating, a pulse signal of a period according to the rotational speed of said take-up gear wheel, a controller 21, a servo-mechanism 22, an idler gear actuating means 23, and a second pulse generator 24 for generating a pulse signal of a period according to the rotational speed of said capstan motor 16.

Operation of a driving system of the above constitution such as shown in Fig. 4 will now be described. When the driving system is being shifted from a state of stop of a tape to a state of quick forward driving or rewinding of a tape, the idler gear wheel 14 is caused to be in contact with the driving gear wheel 15 which is driven by the capstan motor 16. When the driving system is being shifted from a state of stop of a tape to a state of quick forward driving of a tape by the rotational direction of the driving gear wheel 15, the idler gear wheel 14 rotates in contact with the take-up gear wheel 18. When it is being shifted from a state of stop of a tape to a state of rewinding of a tape by the rotational direction of the driving gear wheel 15, the idler gear wheel 14 rotates in contact with the feed gear wheel 17 so as to feed the tape into rewinding direction.

However, in a system such as the above, the time required to change the rotational direction of the capstan motor 16 is undefined and it is necessary to allow for a sufficiently long waiting period to ensure that the rotational direction is changed completely. This in turn results in a long time being taken to shift from a state of stop of a tape to a state of quick forward driving or rewinding of a tape. If an attempt is made in this system to reduce this shifting time by shortening the waiting time necessary to complete changing the rotational direction of the capstan motor 16, the idler gear wheel 14 comes into contact with the driving gear wheel 15 before the rotational direction of the capstan motor 16 has completely changed, causing the idler gear wheel 14 to come into rotating contact with a reel on the opposite side of a desired reel (this state is hereafter referred to as the reverse rotating contact). Alternatively, even if the rotational direction of the capstan motor 16 is correct, there is the inconvenience that sometimes defective operation of a mechanical portion causes locking of the idler gear wheel 14 and the driving gear wheel 15 or reverse rotating contacting.

US patent 4494712 (Godwin et al) discloses monitoring tape travel by using detectors associated with the tape reels and the capstan, however it does not use this for controlling an idler gear wheel.

Embodiments of the present invention overcome the problems of the above conventional apparatus and provide a magnetic recording and reproducing apparatus which is capable of preventing reverse rotating contact or mechanical locking while an idler gear is being brought into rotating contact with a reel.

The present invention provides a magnetic recording and reproducing apparatus comprising:
a feed gear wheel and a take-up gear wheel each of which drives a hub of a reel in a cassette; a capstan motor which generates a driving force; a driving gear wheel which is driven by said capstan motor; an idler gear wheel which assumes two positions, in one of which the idler gear wheel is in contact with said driving gear wheel and in the other of which the idler gear wheel is not in contact with said driving gear wheel, wherein when the idler gear wheel is in contact with the driving gear wheel, the idler gear wheel is in rotating contact with either the feed gear wheel or the take-up gear wheel according to the rotational direction of the driving gear wheel; idler gear wheel actuating means which causes said idler gear wheel to be shifted; a first pulse generator for generating a pulse signal of a period according to the rotational speed of said capstan motor; and second and third pulse generator means for generating a feed reel pulse signal and a take-up reel pulse signal each having a period according to the rotational speed of said respective two reels; a servo-mechanism which uses said pulse signal to control the rotation of said capstan motor; a servo locking detector which detects the servo locking of said servo-mechanism; a capstan rotational direction detector which detects the rotational direction of said capstan motor; and a controller which receives as inputs said feed reel pulse signal, said take-up reel pulse signal, said servo locking signal and said capstan rotational direction signal for controlling said idler gear actuating means, whereby upon a fast forward (FF) or a rewind (REW) command and after monitoring the correct speed and rotational direction of the capstan the idler gear wheel is actuated towards a respective rotating contact position, said controller detects either whether the pulse signals of both reels are generated, that is, both reels are rotating, so as to confirm that the rotating contact has normally been completed, or whether within a predetermined time the pulse signal of only one reel is generated, that is, only one reel is rotating, or the pulse signal of neither reel is generated, that is, neither reel is rotating, in order to judge that faulty rotating contact of the idler gear has occurred, and a command is issued to the idler gear wheel actuating means to return the idler gear to a position where the idler gear does not contact the driving gear, and to restart the operation of the fast forward or rewind command.

With the above construction, when the idler gear wheel is in rotating contact with either the feed gear wheel or the take-up gear wheel, the controller detects that pulse signals of both gear wheels are generated, that is, both gear wheels are rotating, so as to confirm that the rotating contact has normally been completed. In the case where the pulse signal of only one gear wheel is generated, that is, only one gear wheel is rotating, or in the case where the pulse signal of neither gear wheel is generated, that is, neither gear wheel is rotating, it is judged that the faulty rotating contact of the idler gear has occurred, and a command is issued to the idler gear wheel actuating means to return the idler gear wheel to a position where the idler gear wheel does not contact the driving gear wheel, so that the operation of achieving rotating contact is caused to be attempted again.

An embodiment of the present invention will hereafter be explained with reference to the drawings in which: Fig. 1 is a block diagram of constituent parts of the magnetic recording and reproducing apparatus of the present invention, Fig. 2 and Fig. 3 are flowcharts showing operation of the magnetic recording and reproducing apparatus of the present invention, and Fig. 4 is a block diagram of constituent parts of a conventional apparatus.

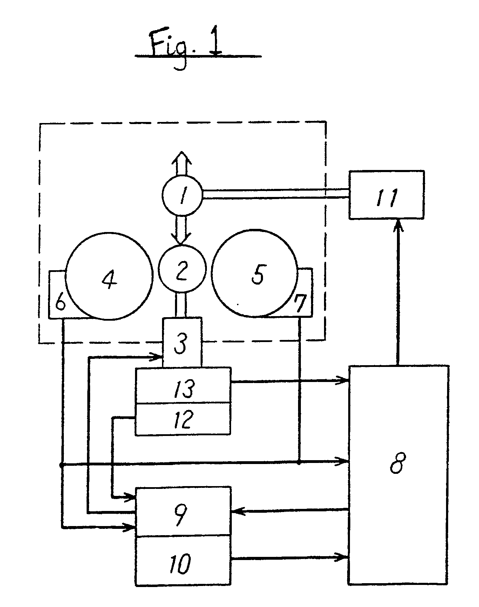

Fig. 1 is block diagram showing an embodiment of a magnetic recording and reproducing apparatus of the present invention.

An idler gear wheel 1 is shifted by means of an idler gear actuating means between a state wherein the idler gear wheel 1 contacts a driving gear wheel 2 and a state wherein the idler gear wheel does not contact the driving gear wheel 2, The driving gear wheel 2 is driven by a capstan motor 3. There is a feed gear wheel 4, a take-up gear wheel 5, a second pulse generator 6 for generating a feed reel pulse signal, a third pulse generator 7 for generating a take-up reel pulse signal, a controller 8, and a servo-mechanism 9 which receives a command from the controller 8 and controls the capstan motor 3. A servo locking detector 10 detects whether the capstan servo is effected. An idler gear actuating means portion 11 shifts the idler gear position according to the command given from the controller 8. There is a first pulse generator 12 for generating a capstan pulse signal and a capstan rotational direction detector 13.

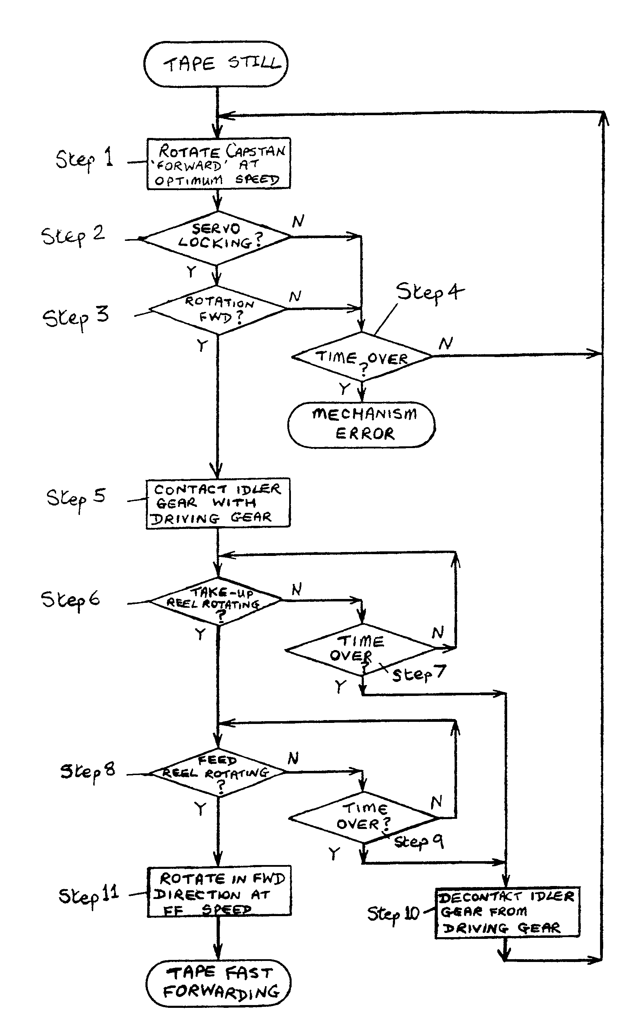

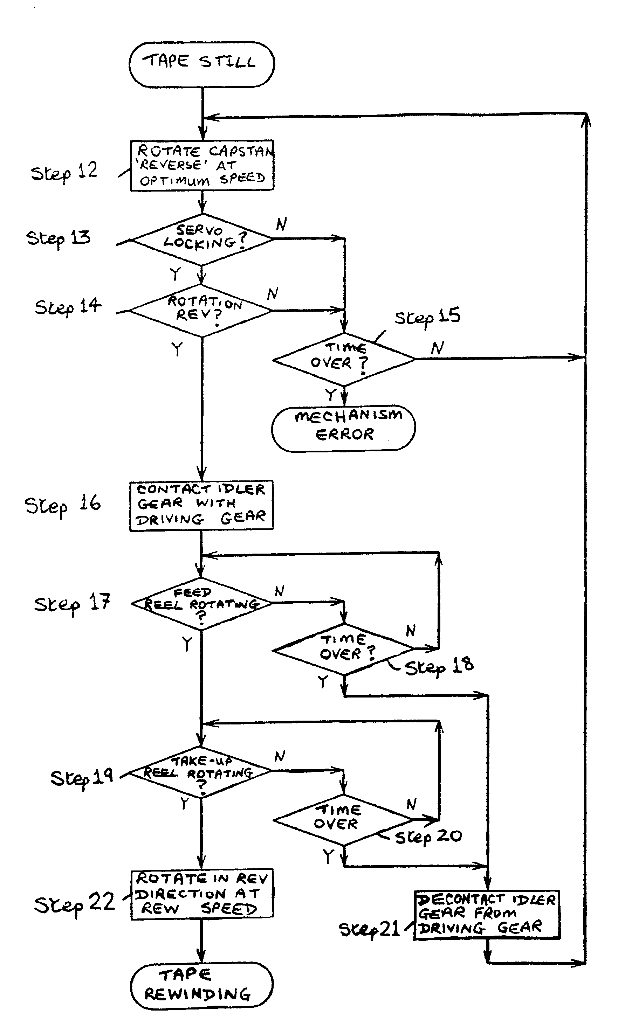

Fig. 2 and Fig. 3 and flowcharts showing operating steps of the magnetic recording and reproducing apparatus of the embodiment shown in Fig. 1. Fig. 2 is a flowchart showing a shift from a state of stop of a tape to a state of fast forward, FF, and Fig. 3 is a flowchart showing a shift from a state of stop of a tape to a state of rewind REW.

Looking first at Fig. 2, in step 1, the controller 8 instructs the servo-mechanism 9 to cause the capstan motor 3 to rotate at an optimum speed for rotating contact of the idler gear wheel 1 and instructs the rotational direction as well. In step 2, the controller 8 observes an output of the servo locking detector 10 and confirms that the speed agrees with an instruction given in step 1. Step 2 returns to step 1 if the servo is not locked and keeps giving instructions to the servo. In step 3, the controller 8 observes an output of the capstan rotational direction detector 13 and confirms that the capstan rotation is in FWD (forward) direction, and if the direction is not FWD direction, the step 3 returns to the step 1 and keeps giving directions to the servo-mechanism 9. If the output of the capstan locking is not given for over a certain length of time or if the rotational direction is not in FWD direction for over a certain length of time, such condition is judged by the step 4, which in turn processes such condition as a faulty servo operation of a faulty mechanical operation. In step 5, the controller 8 gives an instruction to the idler gear actuating means 11 to cause the idler gear wheel 1 to contact with the driving gear wheel 2. In step 6, it is confirmed by monitoring the take up reel pulse signal whether or not the take-up gear wheel 5 starts rotating, that is whether or not a shift to a state of FF causes the reel with which the idler gear wheel 1 is to come into rotating contact to start rotating. If the take-up gear wheel 5 does not rotate, for over a certain length of time, the step 7 detects such condition and advances to step 10. In step 8, it is confirmed whether or not the feed gear wheel 4 has started rotation by virtue of the idler gear wheel 1 coming into rotating contact with the take-up gear wheel 5 so that a tape is wound up by the take-up gear wheel 5, and if the feed gear wheel 4 does not start rotating within a certain length of time, the step 8 detects such condition and advances to step 10. In step 10, the controller 8 gives a command to the idle gear actuating means to shift into a direction so as to cause the idler gear wheel 1 to be kept away from the driving gear wheel 2, so that the step 10 returns to the step 1 thereby to try the operation of rotating contact again. If both reels have been rotated, the speed of FF (about 50 to 500 times the optimum speed of rotating contact) is instructed in step 11. In a similar way, the shift to REW is performed according to the flow of the flowchart shown in Fig.

3.

As stated above, according to the embodiment of the present invention, when shifting from a state of stop of a tape to a state of FF or REW, it is possible to detect faulty rotating contact caused by reverse rotating contact or mechanical locking of the idler gear 1 and to try the shifting operation again. Furthermore, since there is no waiting period after a command for optimum speed of rotating contact and direction are issued because the servo locking and rotational direction are checked, it is possible to absorb variation of the capstan and mechanism of driving system so that it becomes possible to reduce the shifting time. If the tape is slack when shifted to FF or REW, because the tape will be wound up until both reels start rotating at an optimum speed (at low speed) of rotating contact (ie. until the tape slackness is eliminated) the advantageous effect is obtained that the tape is not damaged.

## Claims

1. A magnetic recording and reproducing apparatus comprising: a feed gear wheel (5) and a take-up gear wheel (4) each of which drives a hub of a reel in a cassette; a capstan motor (3) which generates a driving force; a driving gear wheel (2) which is driven by said capstan motor; an idler gear wheel (1) which assumes two positions, in one of which the idler gear wheel (1) is in contact with said driving gear wheel (2) and in the other of which the idler gear wheel (1) is not in contact with said driving gear wheel (2), wherein when the idler gear wheel is in contact with the driving gear wheel, the idler gear wheel is in rotating contact with either the feed gear wheel (4) or the take-up gear wheel (5) according to the rotational direction of the driving gear wheel (2); idler gear wheel actuating means (11) which causes said idler gear wheel to be shifted; a first pulse generator (12) for generating a pulse signal of a period according to the rotational speed of said capstan motor (3); and second and third pulse generator means (6, 7) for generating a feed reel pulse signal and a take-up reel pulse signal each having a period according to the rotational speed of said respective two reels; a servo-mechanism (9) which uses said pulse signal to control the rotation of said capstan motor; a servo locking detector (10) which detects the servo locking of said servo-mechanism (9); a capstan rotational direction detector (13) which detects the rotational direction of said capstan motor (3); and a controller (8) which receives as inputs said feed reel pulse signal, said take-up reel pulse signal, said servo locking signal and said capstan rotational direction signal for controlling said idler gear actuating means, whereby upon a fast forward (FF) or a rewind (REW) command and after monitoring the correct speed and rotational direction of the capstan (steps 2, 3,; 13, 14) the idler gear wheel is actuated towards a respective rotating contact position (step 5; 16), said controller detects either whether the pulse signals of both reels are generated (steps 6,8; 17,19), that is, both reels are rotating, so as to confirm that the rotating contact has normally been completed, or whether within a predetermined time the pulse signal of only one reel is generated, that is, only one reel is rotating, or the pulse signal of neither reel is generated, that is, neither reel is rotating, in order to judge that faulty rotating contact of the idler gear (1) has occurred, and a command is issued (step 21) to the idler gear wheel actuating means portion (11) to return the idler gear (1) to a position where the idler gear (1) does not contact the driving gear (2), and to restart the operation of the fast forward or rewind command.

2. A magnetic recording and reproducing apparatus according to claim 1, wherein the controller (8) instructs the servo-mechanism (9) of an optimum capstan motor rotational speed for the rotating contact of the idler gear wheel (1), said controller (8) confirms by the output of the servo locking detector (10) that the capstan servo has locked and that the rotational speed of the capstan motor (3) has become optimum, and further confirms by the output of the capstan rotational direction detector (13) that the rotational direction of the capstan motor (3) is in FWD (forward) direction when shifting to PLAY or FF (fast feeding), and in the REV (reverse) direction when shifting to REW (rewinding), and then gives instruction to cause the idler gear wheel (1) to contact with the driving gear wheel (2).

## Revendications

1. Appareil d'enregistrement et de reproduction magnétique comprenant : un pignon débiteur (5) et un pignon récepteur (4) qui entraînent chacun un noyau d'enroulement d'une bobine disposée dans une cassette ; un moteur de cabestan (3) qui produit une force d'entraînement ; un pignon d'entraînement (2) qui est entraîné par ledit moteur de cabestan ; un pignon libre (1) qui peut prendre deux positions, dans l'une desquelles le pignon libre (1) est en contact avec ledit pignon d'entraînement (2) et dans l'autre desquelles le pignon libre (1) n'est pas en contact avec ledit pignon d'entraînement (2), où, lorsque le pignon libre est en contact avec le pignon d'entraînement, le pignon libre est en contact de rotation avec le pignon débiteur (4) ou bien le pignon récepteur (5) selon le sens de rotation du pignon d'entraînement (2) ; un moyen (11) d'actionnement de pignon libre qui amène ledit pignon libre à se déplacer ; un premier générateur d'impulsions (12) servant à produire un signal d'impulsions d'une période qui est fonction de la vitesse de rotation dudit moteur de cabestan (3) ; et des deuxième et troisième moyens générateurs d'impulsions (6, 7) servant à produire un signal d'impulsions de bobine débitrice et un signal d'impulsions de bobine réceptrice ayant chacun une période qui est fonction de la vitesse de rotation desdites deux bobines respectives ; un servomécanisme (9) qui utilise ledit signal d'impulsions pour commander la rotation dudit moteur de cabestan ; un détecteur de verrouillage asservi (10) qui détecte le verrouillage asservi dudit servomécanisme (9) ; un détecteur (13) de sens de rotation du cabestan, qui détecte le sens de rotation dudit moteur de cabestan (3) ; et un dispositif de commande (8) qui reçoit comme signaux d'entrée ledit signal d'impulsions de bobine débitrice, ledit signal d'impulsions de bobine réceptrice, ledit signal de verrouillage asservi et ledit signal de sens de rotation de cabestan afin de commander ledit moyen d'actionnement du pignon libre, si bien que, lors d'une instruction d'avance rapide (FF) ou de rebobinage (REW) et après contrôle de la vitesse correcte et du sens de rotation du cabestan (étapes 2, 3 ; 13, 14), le pignon libre est actionné de façon à aller vers une position de contact de rotation respective (étape 5 ; 16), ledit dispositif de commande détermine si les signaux d'impulsions des deux bobines ont ou non été produits (étapes 6, 8 ; 17, 19), c'est-à-dire si les deux bobines sont en train de tourner, afin de confirmer que le contact de rotation s'est normalement effectué, ou bien si, dans les limites d'un temps prédéterminé, le signal d'impulsions d'une seule bobine a été produit, c'est-à-dire qu'une seule bobine est en train de tourner, ou le signal d'impulsions d'aucune bobine n'a été produit, c'est-à-dire qu'aucune bobine n'est en train de tourner, afin de décider qu'un contact de rotation défectueux du pignon libre (1) est survenu, et une instruction est délivrée (étape 21) à la partie du moyen (11) d'actionnement du pignon libre pour ramener le pignon libre (1) en une position dans laquelle le pignon libre (1) n'est pas en contact avec le pignon d'entraînement (2) et pour faire recommencer l'opération liée à l'instruction d'avance rapide ou de rebobinage.

2. Appareil d'enregistrement et de reproduction magnétique selon la revendication 1, où le dispositif de commande (8) donne au servomécanisme (9) une instruction relative à la vitesse optimale de rotation du moteur de cabestan pour le contact de rotation du pignon libre (1), ledit dispositif de commande (8) confirme à l'aide du signal de sortie du détecteur de verrouillage asservi (10) que l asservissement du cabestan a été verrouillé et que la vitesse de rotation du moteur de cabestan (3) est devenue optimale, et confirme en outre à l'aide du signal de sortie du détecteur (13) de sens de rotation de cabestan que le sens de rotation du moteur de cabestan (3) est le sens FWD (avance) lors d'un déplacement vers PLAY (lecture) ou FF (avance rapide), et le sens REV (inverse) lors d'un déplacement vers REW (rebobinage), puis donne instruction d'amener le pignon libre (1) à venir en contact avec le pignon d'entraînement (2).

**Patentansprüche**

1. Gerät zur magnetischen Aufzeichnung und Wiedergabe mit: einem Vorschubgetrieberad (4) und einem Aufnahmegetrieberad (5), wobei jedes einen Wickelkern in einer Kassette antreibt; einem Kapstan- oder Bandantriebsrollenmotor (3), der eine Antriebskraft erzeugt; einem Antriebsgetrieberad (2), welches von dem Bandantriebsrollenmotor (3) angetrieben wird; einem Zwischengetrieberad (1), das zwei Stellungen annimmt, wobei in einer von diesem das Zwischengetrieberad (1) in Berührung mit dem Antriebsgetrieberad (2) und in der anderen von diesen das Zwischengetrieberad (1) nicht in Berührung ist mit dem Antriebsgetrieberad (2), wobei, wenn das Zwischengetrieberad in Berührung ist mit dem Antriebsgetrieberad, das Zwischengetrieberad in Drehkontakt mit entweder dem Vorschubgetrieberad (4) oder dem Aufnahmegetrieberad (5) gemäß der Drehrichtung des Antriebsgetrieberads (2) ist; einer Zwischengetrieberadbetätigungseinrichtung (11), die das Zwischengetrieberad versetzt; einem ersten Impulsgenerator (12) zum Erzeugen eines Impulssignals von einer Zeitdauer gemäß der Drehgeschwindigkeit des Antriebsrollenmotors (3); und einer zweiten und dritten Impulsgeneratoreinrichtung (6,7) zum Erzeugen eines Vorschubrollenimpulssignals, und eines Aufnahmerollenimpulssignals, wobei jedes eine Zeitdauer gemäß der Drehgeschwindigkeit der entsprechenden zwei Wickel hat; einem Servormechanismus (9), der das Impulssignal dazu verwendet, die Drehung des Bandantriebsrollenmotors zu steuern; einen Servorverschließerfasser (10), der den Servoverschluß des Servomechanismus (9) erfaßt; einem Bandantriebsrollendrehrichtungsdetektor (13), der die Drehrichtung des Bandantriebsrollenmotors (3) erfaßt; und einer Steuereinrichtung (8), die als Eingabe das Vorschubgetrieberadimpulssignal, das das Aufnahmerollenimpulssignal, das Servorverschließsignal und das Bandantriebsrollendrehrichtungssignal empfängt zum Steuern der Zwischengetrieberadbetätigungseinrichtung, wodurch auf einen Schnellaufvorwärts- (FF) oder einen Rückwärts- (REW) Befehl und nach Überprüfen der richtigen Geschwindigkeit und Drehrichtung des Bandsantriebs (Schritte 2, 3; 13, 14) das Zwischengetrieberad gegen eine entsprechende Drehberührungsstellung (Schritt 5; 16) gedrückt wird, wobei die Steuereinrichtung entweder erfaßt, ob die Impulssignale, die von beiden Wickeln erzeugt werden (Schritte 6, 8; 17, 19), d.h. daß sich beide Wickel drehen, um so zu bestätigen, daß die Drehberührung normalerweise beendet wurde oder ob innerhalb einer vorbestimmten Zeit das Impulssignal nur eines Rades erzeugt wurde, d.h. keines der beiden Räder ist in Drehung, um zu beurteilen, daß die fehlerhafte Drehberührung des Zwischengetriebes (1) aufgetreten ist, und ein Befehl ausgegeben wird (Schritt 21), zu dem ZwischengetriebradBetätigungsbereich (11), um das Zwischengetriebe (1) in eine Position zurückzuversetzen, wo das Zwischengetriebe (1) das Antriebsgetriebe (2) nicht berührt, um den Betrieb des schnellen Vorwärts- oder Rückwärtsbefehls erneut zu starten.

2. Ein Gerät zur magnetischen Aufzeichnung und Wiedergabe nach Anspruch 1, wobei die Steuereinheit (8) den Servomechanismus (9) mit einer optimalen Bandantriebsrollenmotordrehgeschwindigkeit für die Drehberührung des Zwischengetrieberads (1) anweist, wobei die Steuereinrichtung (8) durch die Ausgabe des Servoverschlußdetektors (10) bestätigt, daß die Bandantriebsrollenservoreinrichtung gesperrt wurde und daß die Drehgeschwindigkeit des Bandantriebsrollenmotors (3) in einem Optimum liegt, und weiterhin durch die Ausgabe des Bandantriebsrollendrehrichtungsdetektors (13) betätigt, daß die Drehrichtung des Bandantriebsrollenmotors (3) sich in FWD (Vorwärts)-Richtung befindet, wenn auf PLAY oder FF (schnelles Spulen) bewegt wurde und in die REV (Rückwärts)-Richtung umschwenkt, wenn nach REW (Zurückspulen) verschoben wurde und gibt dann Befehle, um hervorzurufen, daß das Zwischengetrieberad (1) das Antriebsgetrieberad (2) berührt.

Fig. 1

Flowchart:

TAPE STILL

Step 12 — ROTATE CAPSTAN 'REVERSE' AT OPTIMUM SPEED

Step 13 — SERVO LOCKING? — N / Y

Step 14 — ROTATION REV? — N / Y

Step 15 — TIME OVER? — N / Y → MECHANISM ERROR

Step 16 — CONTACT IDLER GEAR WITH DRIVING GEAR

Step 17 — FEED REEL ROTATING? — N / Y

Step 18 — TIME OVER? — N / Y

Step 19 — TAKE-UP REEL ROTATING? — N / Y

Step 20 — TIME OVER — N / Y

Step 21 — DECONTACT IDLER GEAR FROM DRIVING GEAR

Step 22 — ROTATE IN REV DIRECTION AT REW SPEED

TAPE REWINDING

Fig. 4